# EUROPÄISCHE PATENTSCHRIFT

(11) **EP 1 873 125 B1**
(45) Veröffentlichungstag und Bekanntmachung des Hinweises auf die Patenterteilung: **04.01.2012**
(21) Anmeldenummer: 07012435.9
(22) Anmeldetag: 26.06.2007
(51) Int. Cl.: C03B 35/26, F27B 9/24, B65G 39/20

(54) **Vorrichtung zur thermischen Behandlung von stabförmigen Gegenständen**
Device for thermal treatment of rod-shaped objects
Dispositif destiné au traitement thermique d'objets en forme de tige

(30) Priorität: 27.06.2006 DE 102006029508
(43) Veröffentlichungstag der Anmeldung: 02.01.2008
(73) Patentinhaber: Elino Industrie-Ofenbau GmbH, 52355 Düren (DE)
(72) Erfinder: Johnen, Dieter, 52355 Düren (DE); Lopez Lopez, Francisco, 52388 Nörvenich-Frauwüllesheim (DE)
(74) Vertreter: Hauck Patent- und Rechtsanwälte

(56) Entgegenhaltungen:
- DE-C- 887 102
- US-A- 2 313 814

## Beschreibung

Die vorliegende Erfindung betrifft eine Vorrichtung zur thermischen Behandlung von stabförmigen Gegenständen, insbesondere Leuchtstoffröhren, mit einer Behandlungskammer und einer sich durch diese bewegenden Fördereinrichtung für die stabförmigen Gegenstände mit einer Vielzahl von parallel zueinander und im Abstand voneinander angeordneten Förderwalzen, die sich um ihre Achse drehen und zwischen denen die zu behandelnden Gegenstände mit ihrer Längsachse quer zur Förderrichtung gelagert sind.

Derartige Vorrichtungen zur thermischen Behandlung (Industrieöfen) sind bekannt. Sie werden beispielsweise zur thermischen Behandlung von Leuchtstoffröhren verwendet, wobei die Vorrichtungen als Sinterausheizstufe des Leuchtstoffs dienen und/oder zum Ausheizen der organischen Trennschichten zwischen Glas und Leuchtstoff verwendet werden. Auch werden derartige Vorrichtungen beispielsweise als Vorwärmstufe bei derartigen Leuchtstoffröhren eingesetzt. Innerhalb der Behandlungskammer finden dabei beispielsweise Temperaturen von ca. 700°C bis ca. 800°C Anwendung.

Bei derartigen Vorrichtungen müssen die zu behandelnden stabförmigen Gegenstände möglichst gleichmäßig, d.h. gleichmäßig über ihre gesamte Oberfläche, mit Wärme beaufschlagt werden. Es ist dabei insbesondere von Bedeutung, dass keine nicht direkt mit der Heizatmosphäre beaufschlagte Auflagefläche des Gegenstandes auf einer Fördereinrichtung verbleibt. Es müssen daher spezielle Förddreinrichtungen Verwendung finden, die die gewünschte gleichmäßige Wärmebeaufschlagung garantieren.

Man hat daher bereits für derartige Vorrichtungen Walzenfördersysteme vorgeschlagen, bei denen eine Vielzahl von parallel und im Abstand voneinander angeordneten Förderwalzen durch die Behandlungskammer bewegt wird, wobei durch Drehen der Walzen um ihre Achsen eine Rotation der stabförmigen Gegenstände um ihre Achsen während der Bewegung des Walzenfördersystems durch die Behandlungskammer erfolgt. Auf diese Weise wird sichergestellt, dass die stabförmigen Gegenstände während ihres Weges durch die Behandlungskammer permanent gedreht werden, so dass ihre gesamte Oberfläche relativ gleichmäßig thermisch behandelt wird. Als Förderwalzen hat man dabei bisher massive Gusswalzen verwendet, mit denen die stabförmigen Gegenstände über ihre gesamte Länge in Kontakt stehen. Derartige massive Förderwalzen haben jedoch den Nachteil, dass sie aufgrund ihrer großen Masse viel Heizenergie schlucken, da sie selbst erst einmal aufgeheizt werden müssen, um eine gleichmäßige Erwärmung der stabförmigen Gegenstände sicherzustellen. Darüber hinaus weisen sie eine relativ große Kontaktfläche mit den zu behandelnden Gegenständen auf, so dass trotz der Rotation der Walzen nicht immer eine gleichmäßige thermische Behandlung der Gegenstände sichergestellt ist. Schließlich besteht die Gefahr, dass sich die Walzen aufgrund der thermischen Einwirkung verformen, so dass sich der Spalt zwischen benachbarten Walzen erweitern kann, was zur Folge hat, dass kleinere Gegenstände zwischen den Walzen eingequetscht werden können, so dass sich große Probleme ergeben können. Derartige Systeme sind ferner mit einem hohen Wartungsaufwand verbunden.

Eine Vorrichtung zur thermischen Behandlung von stabförmigen Gegenständen mit den Merkmalen des Oberbegriffs des Patentanspruchs 1 ist aus der DE 887 102 C bekannt. Bei dieser bekannten Vorrichtung, die zur maschinellen Wärmebehandlung von Glasröhren für die Herstellung von elektrischen Leuchtröhren dient, weisen die Förderwalzen glatte Oberflächen auf, wobei die zwischen den einzelnen Förderwalzen gelagerten Glasröhren in linienförmigem Kontakt mit der Oberfläche der Förderwalzen stehen.

Aus der US 2 313 814 A ist eine Maschine zur Herstellung von Glasfläschchen bekannt. Die Glasfläschchen werden hierbei mit Förderwalzen gefördert, die nockenförmige Erweiterungen in der Form von Scheiben aufweisen, auf denen die Glasfläschchen gelagert sind. Die nockenförmigen Erweiterungen sind hierbei rechtwinklig zu den Achsen der Förderwalzen angeordnet.

Der vorliegenden Erfindung liegt die Aufgabe zugrunde, eine Vorrichtung der eingangs wiedergegebenen Art zu schaffen, die bei besonders niedrigen Betriebskosten eine besonders schonende und gleichmäßige thermische Behandlung der stabförmigen Gegenstände ermöglicht.

Diese Aufgabe wird erfindungsgemäß bei einer Vorrichtung der angegebenen Art durch die kennzeichnenden Merkmale von Patentanspruch 1 gelöst.

Bei der erfindungsgemäß ausgebildeten Vorrichtung kommt wie beim Stand der Technik als Fördereinrichtung ein walzenfördersystem zum Einsatz. Dieses Walzenfördersystem weist eine Vielzahl von parallel zueinander und im Abstand voneinander angeordneten Förderwalzen auf, die jedoch im Gegensatz zum Stand der Technik keine glatten Oberflächen besitzen, sondern mit sich um ihren Umfang erstreckenden radialen nockenförmigen bzw. sickenförmigen Erweiterungen versehen sind. Diese Erweiterungen stellen sicher, dass die zu behandelnden Gegenstände nur mit geringen Kontaktbereichen der Förderwalzen in Kontakt treten, nämlich ausschließlich mit den nockenförmigen bzw. sickenförmigen Erweiterungen, während die restliche Oberfläche der Walzen kontaktfrei bleibt. Hierdurch wird im Wesentlichen nur ein Punktkontakt mit den stabförmigen Gegenständen erzielt, wobei jeder stabförmige Gegenstand mit mindestens zwei nockenförmigen Erweiterungen einer Förderwalze in Kontakt tritt. Das hat den Vorteil, dass die Behandlungsatmosphäre auch mit der Unterseite der stabförmigen Gegenstände in Kontakt treten kann.

Ferner sind erfindungsgemäß die Erweiterungen von benachbarten Förderwalzen in Axialrichtung der Walzen versetzt zueinander angeordnet. Durch diese Maßnahme kontaktieren benachbarte Förderwalzen die stabförmigen Gegenstände an verschiedenen Stellen in deren Längsrichtung. Hinzu kommt, dass durch diese Maßnahme sich die nockenförmigen Erweiterungen von benachbarten Förderwalzen in Förderrichtung überschneiden können, so dass die benachbarten Förderwalzen trotz der vorgesehenen Erweiterungen relativ nah aneinander angeordnet werden können und sich ein relativ enger Walzenspalt ergibt. Durch die Überschneidungen wird ferner sichergestellt, dass selbst bei Verformungen der Förderwalzen kein Festklemmen der zu behandelnden Gegenstände im Walzenspalt auftreten kann, da hierbei Vergrößerungen des Walzenspaltes relativ unschädlich sind.

Infolge der vorstehend erwähnten Überschneidungen der nockenförmigen Erweiterungen können mit der erfindungsgemäßen Vorrichtung stabförmige Gegenstände mit unterschiedlichen Durchmessern, d.h. unterschiedlichen Dicken bzw. Breiten, behandelt werden, ohne dass Förderwalzen mit anderen Durchmessern zum Einsatz gelangen müssen, da die erfindungsgemäβe Vorrichtung, wie vorstehend erwähnt, ein Festklemmen von kleinen Gegenständen zwischen den Förderwalzen verhindert, andererseits eine ausreichend sichere Positionierung der rotierenden Gegenstände zwischen benachbarten Förderwalzen, insbesondere auch bei Gegenständen mit größerem Durchmesser, sichert.

Die nockenförmigen Erweiterungen sind schräg zur Förderwalzenachse ausgebildet, so dass sich hierbei Taumelscheibeneffekte ergeben. Das hat den Vorteil, dass sich bei Drehung der Walzen die Kontaktpunkte der stabförmigen Gegenstände mit den Erweiterungen auch in Längsrichtung der stabförmigen Gegenstände bewegen.

Die nockenförmigen Erweiterungen erstrecken sich vorzugsweise ringförmig um den gesamten Umfang der Förderwalzen. Sie weisen vorzugsweise im Förderwalzenlängsschnitt einen punktförmigen Auflagepik auf, d.h. sind im Querschnitt vorzugsweise bogenförmig (gekrümmt) ausgebildet, um einerseits eine möglichst geringe Kontaktfläche zu haben, andererseits jedoch keine zu stark punktförmig konzentrierten Auflagekräfte auf die stabförmigen Gegenstände aufzubringen, wie dies beispielsweise bei im Querschnitt dreieckförmig ausgebildeten Erweiterungen der Fall wäre. Eine derartige Dreiecksform bzw. Schneidenform ist daher weniger erwünscht, um die Oberfläche der stabförmigen Gegenstände nicht zu beschädigen.

In Weiterbildung der Erfindung sind die Förderwalzen hohl ausgebildet. Dieses Merkmal der Erfindung schließt nicht aus, dass auch Walzen mit Vollquerschnitten zur Anwendung gelangen können, jedoch werden Hohlquerschnitte aufgrund ihrer geringeren Masse bevorzugt, da sich hierdurch insbesondere Energie sparen lässt. Es versteht sich, dass hierbei die Wandstärke der Förderwalzen aus Materialersparnis bzw. Energieersparnis möglichst gering gehalten wird, andererseits aber aus statischen Gründen eine ausreichend große Wandstärke vorhanden sein muss. Für den auf diesem Gebiet tätigen Fachmann ist hierbei ohne weiteres eine Optimierung der Wandstärke möglich.

Wie bereits erwähnt, werden während der Bewegung der Fördereinrichtung, d.h. der Förderwalzen, durch die Behandlungskammer die Förderwalzen um ihre eigenen Achsen gedreht. Hierdurch werden die zu behandelnden stabförmigen Gegenstände, die jeweils zwischen zwei benachbarten Förderwalzen angeordnet sind und von den nockenförmigen Walzenerweiterungen getragen werden, um ihre Längsachse gedreht, wobei jedoch kein Fördereffekt erzeugt wird. Ein solcher Fördereffekt, d.h. die translatorische Bewegung der Förderwalzen durch die Behandlungskammer, wird von der Fördereinrichtung durchgeführt, wie später noch im Einzelnen beschrieben.

Was die Ausbildung dieser Fördereinrichtung anbetrifft, so besitzt die die Förderwalzen aufweisende Fördereinrichtung vorzugsweise beiderseits der Behandlungskammer mindestens je einen umlaufenden angetriebenen Endlosriemen (Zahnriemen) oder ein umlaufendes angetriebenes Endlosband, an dem die Förderwalzen über Befestigungseinrichtungen drehbar gelagert sind. Durch die Umlaufbewegung des Endlosriemens bzw. Endlosbandes werden daher die Förderwalzen durch die Behandlungskammer bewegt. Die Endlosriemen bzw. Endlosbänder sind außerhalb der eigentlichen Behandlungskammer angeordnet, so dass sie nicht den Behandlungstemperaturen ausgesetzt sind. Als Befestigungseinrichtungen für die Förderwalzen finden vorzugsweise Bügel Verwendung, die jeweils einen Montageblock mit Lagereinsatz aufweisen, in dem eine Förderwalze drehbar gelagert ist. Die Bügel sind somit starr mit dem mindestens einen Endlosriemen bzw. Endlosband verbunden. Es versteht sich, dass auch mehrere parallel laufende Riemen oder Bänder Verwendung finden können, wobei erfindungsgemäß vorzugsweise zwei solcher parallel laufender Bänder oder Riemen eingesetzt werden, an denen die Bügel befestigt sind.

Die Förderwalzen erstrecken sich somit vorzugsweise von einem Lagereinsatz eines Bügels auf der einen Seite der Kammer bis zu einem Lagereinsatz eines Bügels auf der anderen Seite der Kammer. Des Weiteren sind die Förderwalzen vorzugsweise mit Antriebsrädern versehen, die mit Antriebseinrichtungen zusammenwirken, welche die Förderwalzen in Umdrehungen versetzen. Zweckmäßigerweise sind die Antriebsräder benachbarter Förderwalzen in Axialrichtung der Walzen versetzt angeordnet. Als Antriebseinrichtungen dienen vorzugsweise Ketten, wobei insbesondere eine Zweifachkette zur Anwendung gelangt, die gleichzeitig die versetzten Antriebsräder von sämtlichen Förderwalzen antreibt. Der Antrieb der Förderwalzen über die Antriebsräder erfolgt vorzugsweise nur einseitig außerhalb der Behandlungskammer.

Wie bereits erwähnt, sind die Förderwalzen endseitig drehbar in Lagereinsätzen gelagert, welche über Montageblöcke an Bügeln befestigt sind, die an der eigentlichen Fördereinrichtung (Förderriemen bzw. Förderband) angebracht sind. Vorzugsweise sind die Förderwalzen zusätzlich mit Wälzlagern versehen, deren Außenringe bewegbar auf Schienen gelagert sind. Hierdurch werden die Förderwalzen zusätzlich abgestützt, während sie translatorisch durch die Behandlungskammer bewegt werden.

Die Montageblöcke zur endseitigen Lagerung der Förderwalzen sowie die zugehörigen Befestigungsbügel sind vorzugsweise aus Kunststoff hergestellt. Die Förderwalzen selbst bestehend aus Metall, vorzugsweise aus handelsüblichem niedrig legierten Cr-Ni-Stahl. Sie weisen zweckmäßigerweise in ihren Außenbereichen Kühlbohrungen auf, um eine Temperaturreduzierung in Axialrichtung nach außen zu erzielen.

Die Erfindung wird nachfolgend anhand eines Ausführungsbeispiels in Verbindung mit der beigefügten Zeichnung im Einzelnen erläutert. Es zeigen:
- Figur 1: einen Vertikalschnitt durch einen Teil einer Vorrichtung zur thermischen Behandlung von stab- förmigen Gegenständen;
- Figur 2: eine Draufsicht auf einen Teil der Förderwalzen der Fördervorrichtung der Vorrichtung der Figur 1;
- Figur 3: einen Vertikalschnitt senkrecht zur Förderrich- tung durch vier Förderwalzen der Fördervorrich- tung im vergrößerten Maßstab;
- Figur 4: eine Seitenansicht des seitlichen Endabschnittes einer Förderwalze mit deren Anbringung an einem Förderriemen; und
- Figur 5: eine Draufsicht entsprechend Figur 4.

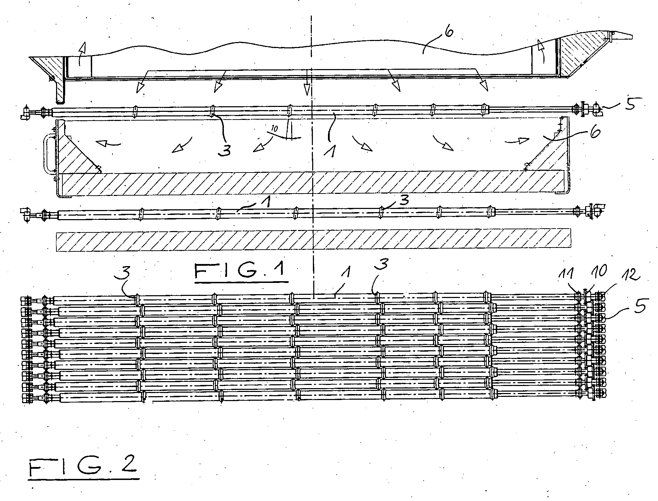

In Figur 1 ist nur der untere Teil einer Vorrichtung zur thermischen Behandlung von stabförmigen Gegenständen im Vertikalschnitt senkrecht zur Förderrichtung der Gegenstände dargestellt. Bei den stabförmigen Gegenständen 1 handelt es sich hierbei um Leuchtstoffröhren. Die Vorrichtung weist eine Behandlungskammer 6 auf, durch die sich Förderwalzen 1 einer Fördereinrichtung 5 hindurchbewegen. Es handelt sich hierbei um eine Vielzahl von parallel zueinander und im Abstand voneinander angeordneten Förderwalzen 1, die sich während ihrer Bewegung durch die Behandlungskammer 6 um ihre Achse drehen und zwischen denen die zu behandelnden Gegenstände mit ihrer Längsachse quer zur Förderrichtung gelagert sind.

Die Förderwalzen 1 weisen in Abständen, die geringer sind als die Länge der zu behandelnden Gegenstände, sich um ihren Umfang erstreckende radiale nockenförmige Erweiterungen 3 auf, wobei die Erweiterungen 3 von benachbarten Förderwalzen 1 in Axialrichtung der Walzen versetzt zueinander angeordnet sind und sich die nockenförmigen Erweiterungen 3 von benachbarten Förderwalzen 1 in Förderrichtung überschneiden. Dies ist in der Draufsicht der Figur 2 zu erkennen. Ferner sind die nockenförmigen Erweiterungen 3 schräg zur Förderwalzenachse ausgebildet.

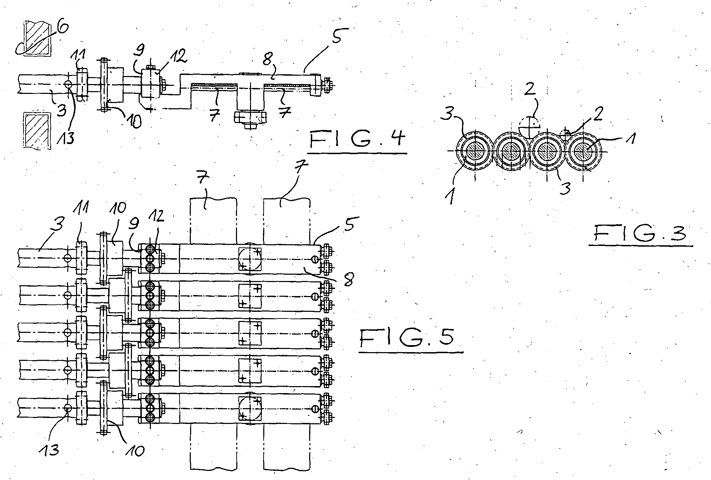

Die die Förderwalzen 3 aufweisende Fördereinrichtung 5 weist beiderseits der Behandlungskammer 6, d.h. außerhalb derselben, zwei umlaufende angetriebene Endlosriemen 7 auf, an denen die Förderwalzen 3 über Befestigungseinrichtungen drehbar gelagert sind. Dies ist in Figur 4 dargestellt, jedoch in den Figuren 1 und 2 nicht gezeigt. In Figur 1 ist die obere Bahn der Förderwalzen 1 gezeigt, die sich in die Blattebene hineinbewegt, und die untere Bahn der Förderwalzen 1, die sich aus der Blattebene herausbewegt. Die die Förderwalzen 1 auf ihrer Umlaufbahn bewegenden Endlosriemen 7 sind als Zahnriemen ausgebildet und werden über entsprechende Riemenscheiben angetrieben und umgelenkt.

Die obere Bahn der Förderwalzen 1 erstreckt sich seitlich aus der Behandlungskammer 6 heraus, während die untere Bahn unterhalb der Behandlungskammer zurückläuft. Innerhalb der Behandlungskammer 6 befindet sich eine geeignete Gasatmosphäre zur thermischen Behandlung der mit den Förderwalzen 1 geförderten Leuchtstoffröhren. Die spezielle Art der thermischen Behandlung spielt für die Erfindung keine Rolle, so dass daher im Einzelnen hierauf nicht eingegangen werden muss.

Wie Figur 3 zeigt, ist jeweils ein stabförmiger Gegenstand (eine Leuchtstoffröhre) 2 zwischen zwei Förderwalzen 1 gelagert. Figur 3 zeigt zwei stabförmige Gegenstände 2 mit unterschiedlichem Durchmesser, um anzudeuten, dass mit der Fördereinrichtung stabförmige Gegenstände mit unterschiedlichen Durchmessern gefördert werden können, ohne dass hierzu die Fördereinrichtung verändert werden muss. Wie Figur 3 zeigt, wird sowohl der stabförmige Gegenstand 2 mit größerem Durchmesser als auch der stabförmige Gegenstand 2 mit kleinerem Durchmesser von den sich um den Umfang der Förderwalzen 1 erstreckenden nockenförmigen Erweiterungen 3 gelagert. Die nockenförmigen Erweiterungen 3 sind, wie in Figur 1 gezeigt, unter einem Winkel von 10° zur Vertikalen in der Figur geneigt und üben somit einen Taumelscheibeneffekt auf die geförderten stabförmigen Gegenstände 2 aus, da die Förderwalzen 1 während Ihrer Umlaufbewegung durch die Behandlungskammer 6 zusätzlich um ihre Achsen gedreht werden Da die nockenförmigen Erweiterungen 3 eine bogenförmige Begrenzungsfläche besitzen, werden die stabförmigen Gegenstände 2 im Wesentlichen punktförmig kontaktiert, wobei sich jedoch keine Spannungsspitzen ergeben, wie dies beispielsweise bei dreieckförmig ausgebildeten nockenförmigen Erweiterungen der Fall wäre.

Bei den Förderwalzen 1 handelt es sich um Hohlwalzen, so dass gegenüber Vollwalzen beträchtlich an Gewicht gespart wird. Die stabförmigen Gegenstände 2, die außerhalb der Vorrichtung zur thermischen Behandlung zwischen die Förderwalzen 3 gelegt werden, werden von den Förderwalzen 3 durch die Behandlungskammer 6 geführt und dabei mit der gewünschten Gasatmosphäre beaufschlagt. Da sich die Förderwalzen 1 bei ihrer Bewegung durch die Behandlungskammer 6 um ihre Achsen drehen, werden die stabförmigen Gegenstände 2 ebenfalls um ihre Achsen gedreht, so dass ihre Oberfläche im Wesentlichen gleichmäßig der Gasatmosphäre ausgesetzt wird und keine permanenten Kontaktstellen mit den Förderwalzen 1 vorhanden sind. Vielmehr wandern die Kontaktstellen um den gesamten Umfang der stabförmigen Gegenstände 2 herum und aufgrund des Taumeleffektes der geneigt angeordneten nockenförmigen Erweiterungen 3 auch in Längsrichtung der stabförmigen Gegenstände 2 hin und her.

Da die nockenförmigen Erweiterungen 3 von benachbarten Förderwalzen 1 in Axialrichtung derselben versetzt zueinander angeordnet sind, können sich die nockenförmigen Erweiterungen 3 von benachbarten Förderwalzen 1 überschneiden, so dass die Gefahr eines Festklemmens der stabförmigen Gegenstände zwischen benachbarten Förderwalzen 1 weitgehend ausgeschaltet wird und die Förderwalzen eng benachbart zueinander angeordnet sein können.

Die Figuren 4 und 5 zeigen die seitlichen Abschnitte der Förderwalzen 3 in der Seitenansicht und der Draufsicht. Die Förderwalzen 3 sind über Befestigungseinrichtungen, die als Bügel 8 ausgebildet sind, an zwei parallelen Endlosriemen 7 (Zahnriemen) befestigt, welche über entsprechende Riemenscheiben (nicht gezeigt) geführt sind. In den Figuren 4 und 5 von links nach rechts weist daher jede Förderwalze 3 eine Kühlbohrung 13, ein Wälzlager 11, dessen Außenring bewegbar auf einer Schiene (nicht gezeigt) gelagert ist, ein Antriebsrad 10 (Kettenrad) und einen Montageblock 12 auf, der auf dem vorstehend erwähnten Bügel 8 befestigt ist. Innerhalb des Montageblocks 12 ist ein Lagereinsatz 9 angeordnet, in dem die Förderwalze 3 drehbar gelagert ist. Die Antriebsräder (Kettenräder) 10 von zwei benachbarten Förderwalzen 3 sind versetzt zueinander angeordnet und werden über eine gemeinsame Antriebskette (nicht gezeigt) angetrieben, so dass die Förderwalzen 3 während ihrer Umlaufbewegung um ihre Achsen gedreht werden.

## Patentansprüche

1. Vorrichtung zur thermischen Behandlung von stabförmigen Gegenständen (2) mit einer Behandlungskammer (6) und einer sich durch diese bewegenden Fördereinrichtung (5) für die stabförmigen Gegenstände (2) mit einer Vielzahl von parallel zueinander und im Abstand voneinander angeordneten Förderwalzen (1), die sich um ihre Achse drehen und zwischen denen die zu behandelnden Gegenstände (2) mit ihrer Längsachse quer zur Förderrichtung gelagert sind, **dadurch gekennzeichnet, dass**
die Förderwalzen (1) in Abständen, die geringer sind als die Länge der zu behandelnden Gegenstände (2), mit sich um ihren Umfang erstreckenden radialen nockenförmigen Erweiterungen (3) versehen sind,
die Erweiterungen (3) von benachbarten Förderwalzen (1) in Axialrichtung der Walzen (1) versetzt zueinander angeordnet sind,
sich die nockenförmigen Erweiterungen (3) von benachbarten Förderwalzen (1) in Förderrichtung überschneiden und
die nockenförmigen Erweiterungen (3) schräg zur Förderwalzenachse ausgebildet sind.

2. Vorrichtung nach Anspruch 1, **dadurch gekennzeichnet, dass** sich die nockenförmigen Erweiterungen (3) ringförmig um den gesamten Umfang der Förderwalzen (1) erstrecken.

3. Vorrichtung nach Anspruch 1 oder 2, **dadurch gekennzeichnet, dass** die nockenförmigen Erweiterungen (3) im Förderwalzenlängsschnitt einen punktförmigen Auflagepik (4) besitzen.

4. Vorrichtung nach einem der vorangehenden Ansprüche, **dadurch gekennzeichnet, dass** die,Förderwalzen (1) hohl ausgebildet sind.

5. Vorrichtung nach einem der vorangehenden Ansprüche, **dadurch gekennzeichnet, dass** die die Förderwalzen (3) aufweisende Fördereinrichtung (5) beiderseits der Behandlungskammer (6) mindestens je einen umlaufenden angetriebenen Endlosriemen (7) bzw. ein umlaufendes angetriebenes Endlosband aufweist, an dem die Förderwalzen (3) über Befestigungseinrichtungen drehbar gelagert sind.

6. Vorrichtung nach Anspruch 5, **dadurch gekennzeichnet, dass** die Befestigungseinrichtungen als Bügel (8) ausgebildet sind, die einen Montageblock (12) mit Lagereinsatz (9) aufweisen, in dem die Förderwalze (3) drehbar gelagert ist.

7. Vorrichtung nach einem der vorangehenden Ansprüche, **dadurch gekennzeichnet, dass** die Förderwalzen (3) Antriebsräder (10) aufweisen, die mit Antriebseinrichtungen zusammenwirken.

8. Vorrichtung nach Anspruch 7, **dadurch gekennzeichnet, dass** die Antriebsräder (10) benachbarter Förderwalzen (3) in Axialrichtung der Walzen versetzt sind.

9. Vorrichtung nach einem der vorangehenden Ansprüche, **dadurch gekennzeichnet, dass** die Förderwalzen (3) mit Wälzlagern (11) versehen sind, deren Außenringe bewegbar auf Schienen gelagert sind.

10. Vorrichtung nach einem der Ansprüche 6 - 9, **dadurch gekennzeichnet, dass** der Montageblock (12) zur Aufnahme des Lagereinsatzes (9) und der Befestigungsbügel (8) aus Kunststoff bestehen.

11. Vorrichtung nach einem der vorangehenden Ansprüche, **dadurch gekennzeichnet, dass** die Förderwalze (3) Kühlbohrungen (13) besitzt.

## Claims

1. A device for the thermal treatment of rod-shaped objects (2), comprising a treatment chamber (6) and a conveying means (5) for the rod-shaped objects (2) moving through the treatment chamber (6) and having a plurality of spaced conveying rollers (1) arranged parallel with respect to one another, the conveying rollers (1) rotating about their axis and having supported between them the objects (2) to be treated with their longitudinal axis transversely with respect to the conveying direction, **characterized in that**
the conveying rollers (1), in distances which are smaller than the length of the objects (2) to be treated, are provided with radial cam-like enlargements (3) extending about their circumference,
the enlargements (3) of adjacent conveying rollers (1) are offset with respect to one another in axial direction of the rollers (1),
the cam-like enlargements (3) of adjacent conveying rollers (1) overlap in conveying direction, and
the cam-like enlargements (3) are formed obliquely with respect to the axis of the conveying rollers.

2. The device according to claim 1,' **characterized in that** the cam-like enlargements (3) extend in an angular manner about the whole circumference of the conveying rollers (1).

3. The device according to claim 1 or 2, **characterized in that** the cam-like enlargements (3) have a punctual supporting peak (4) in the longitudinal section of the conveying roller.

4. The device according to one the preceding claims, **characterized in that** the conveying rollers (1) are hollow.

5. The device according to one of the preceding claims, **characterized in that** the conveying means (5) including the conveying rollers (3) has at least one respective rotating driven endless belt (7) or one rotating driven endless band on both sides of the treatment chamber (6) at which the conveying rollers (3) are rotatably supported by means of fastening means.

6. The device according to claim 5, **characterized in that** the fastening means are formed as hoop (8) and have a mounting block (12) with bearing insert (9) in which the conveying roller (3) is rotatably supported.

7. The device according to one of the preceding claims, **characterized in that** the conveying rollers (3) include drive wheels (10) cooperating with drive means.

8. The device according to claim 7, **characterized in that** the drive wheels (10) of adjacent conveying rollers (3) are offset in axial direction of the rollers.

9. The device according to one of the preceding claims, **characterized in that** the conveying rollers (3) are provided with roller bearings (11) the outer races of which being movably supported on rails.

10. The device according to one of the claims 6-9, **characterized in that** the mounting block (12) for the receipt of the bearing insert (9) and the fastening hoop (8) consist of plastic material.

11. The device according to one of the preceding claims, **characterized in that** the conveying roller (3) has cooling bores (13).

## Revendications

1. Dispositif de traitement thermique d'objets (2) en forme de tige, comprenant une chambre de traitement (6) et un dispositif de transport (5), se déplaçant à travers celle-ci, pour les objets (2) en forme de tige avec une pluralité de rouleaux de transport (1) agencés parallèlement l'un à l'autre et à distance l'un de l'autre, qui tournent autour de leur axe et entre lesquels les objets (2) à traiter sont disposés avec leur axe longitudinal transversal à la direction de transport, **caractérisé en ce que**
les rouleaux de transport (1) sont pourvus d'extensions (3) radiales en forme d'ergots s'étendant sur leur pourtour à des distances qui sont inférieures à la longueur des objets (2) à traiter,
les extensions (3) de rouleaux de transport (1) voisins sont agencées décalées l'une de l'autre dans la direction axiale des rouleaux (1),
les extensions (3) en forme d'ergot de rouleaux de transport (1) voisins se recoupent dans le sens de transport, et
les extensions (3) en forme d'ergot sont en oblique par rapport à l'axe des rouleaux de transport.

2. Dispositif selon la revendication 1, **caractérisé en ce que** les extensions (3) en forme d'ergot s'étendent en forme d'anneau sur tout le pourtour des rouleaux de transport (1).

3. Dispositif selon la revendication 1 ou 2, **caractérisé en ce que** les extensions (3) en forme d'ergot possèdent un pic d'appui (4) ponctuel dans la section longitudinale des rouleaux de transport.

4. Dispositif selon l'une quelconque des revendications précédentes, **caractérisé en ce que** les rouleaux de transport (1) se présentent sous une forme creuse.

5. Dispositif selon l'une quelconque des revendications précédentes, **caractérisé en ce que** le dispositif de transport (5) comprenant les rouleaux de transport (3) présente, de part et d'autre de la chambre de traitement (6), au moins respectivement une courroie sans fin (7) périphérique entraînée ou une bande sans fin périphérique entraînée, sur laquelle les rouleaux de transport (3) sont montés à rotation via des dispositifs de fixation.

6. Dispositif selon la revendication 5, **caractérisé en ce que** les dispositifs de fixation se présentent sous la forme d'étriers (8), qui présentent un bloc de montage (12) avec un palier rapporté (9), dans lequel est monté à rotation le rouleau de transport (3).

7. Dispositif selon l'une quelconque des revendications précédentes, **caractérisé en ce que** les rouleaux de transport (3) présentent des roues d'entraînement (10), qui coopèrent avec des dispositifs d'entraînement.

8. Dispositif selon la revendication 7, **caractérisé en ce que** les roues d'entraînement (10) de rouleaux de transport (3) voisins sont décalées dans la direction axiale des rouleaux.

9. Dispositif selon l'une quelconque des revendications précédentes, **caractérisé en ce que** les rouleaux de transport (3) sont pourvus de roulement (11), dont les bagues externes sont montées mobiles sur des rails.

10. Dispositif selon l'une quelconque des revendications 6 à 9, **caractérisé en ce que** le bloc de montage (12) pour le logement du palier rapporté (9) et l'étrier de fixation (8) sont constitués d'un matériau synthétique.

11. Dispositif selon l'une quelconque des revendications précédentes, **caractérisé en ce que** le rouleau de transport (3) présente des perçages de refroidissement (13).
